# EUROPÄISCHE PATENTSCHRIFT

(11) **EP 1 961 993 B1**
(45) Veröffentlichungstag und Bekanntmachung des Hinweises auf die Patenterteilung: **23.09.2009**
(21) Anmeldenummer: 08000002.9
(22) Anmeldetag: 02.01.2008
(51) Int. Cl.: F16H 1/14, F16H 57/02

(54) **Kegelradgetriebe, insbesondere Kegelstirnradgetriebe**
Bevel gear, in particular bevel spur gear
Engrenage à pignons coniques, en particulier engrenage droit à pignons coniques

(30) Priorität: 20.02.2007 DE 102007008658
(43) Veröffentlichungstag der Anmeldung: 27.08.2008
(73) Patentinhaber: Flender Industriegetriebe GmbH, 09322 Penig (DE)
(72) Erfinder: Langer, Peter, 09322 Penig (DE)
(74) Vertreter: Radünz, Ingo

(56) Entgegenhaltungen:
- DE-A1- 2 138 134
- DE-A1-102004 030 180
- GB-A- 1 005 059
- US-A- 3 813 956
- US-A- 5 765 961

## Beschreibung

Die Erfindung betrifft ein Kegelradgetriebe, insbesondere Kegelstirnradgetriebe mit den Merkmalen des Oberbegriffes des Anspruches 1.

Bekannte Kegelradgetriebe bilden in einem Antriebsstrang zusammen mit der abtriebseitigen Arbeitsmaschine, dem antriebsseitigen. Motor an der Kegelritzelwelle, den Kupplungen und weiteren Nebenaggregaten eine kompakt bauende Antriebseinheit. Zwischen dem Motor und der Eingangswelle des Getriebes mit der Kegelradstufe werden häufig besondere Kupplungen, Betriebsbremsen oder Lüfter einzeln oder gemeinsam in den wellenzug eingebracht. Zum Schutz vor umlaufenden Teilen sind für solche Bauelemente zwischen Motor und Kegelradgetriebe verschiedene Einhausungen bekannt, die in Form von einfachen Abdeckungen oder mechanisch belastbaren Gehäuselaternen gestaltet sein können.

Die bekannten Kegelradgetriebe für einen solchen Antriebsstrang sind nach dem Baukastenprinzip mit gleichen geometrischen Merkmalen in verschiedenen Größen verfügbar. Häufig wird ein solcher Antriebsstrang auf einem Maschinengrundrahmen, der Getriebeschwinge, montiert. Bei besonderen Aufsteckvarianten stützt sich der Antriebsmotor über die Motorlaterne am Getriebegehäuse ab. Die Welle der Arbeitsmaschine trägt das Gewicht der Antriebseinheit. Eine Drehmomentenstütze verhindert die Rotation des Antriebszugs. Solche Getriebe gibt es für alle denkbaren Einbaulagen und mit unterschiedlichen Bauformen der An-und Abtriebswellen. Kennzeichnend ist die Verwendung eines weitgehend unveränderten Grundgehäuses sowohl für die Stirnrad- als auch für die Kegelstirnradgetriebe.

Aus der DE 1 000 654 A ist die Lagerung einer Kegelritzelwelle eines Kegelradgetriebes in einer Lagerbuchse bekannt, bei der die Lagerbuchse in eine lange einteilige Gehäusebohrung eingeführt ist und die an einem Ende einen Flansch aufweist. Die Lagerbuchse umschließt die in ihrem Inneren über Wälzlager geführte Ritzelwelle und bildet mit weiteren Bauteilen eine Baugruppe, die sich einfach vormontieren lässt. Die Gehäusebohrung erstreckt sich axial über die Länge der zylindrischen äußeren Umfangsfläche der Lagerbuchse. Die lange tiefe Bohrung richtet die Baugruppe auf einfache Weise aus und weist die erforderliche Steifigkeit auf. Über Passscheiben zwischen dem Flansch der Lagerbuchse und dem Getriebegehäuse oder über axial wirkende Verstellmechanismen lässt sich das erforderliche Tragbild im Zahneingriff der Kegelradstufe einstellen. Nachteilig an einem solchen Aufbau ist der sehr große axiale Bedarf an Bauraum sowohl für die Lagerbuchse als auch für weitere Bauteile im Antriebsstrang zwischen Motor und Getriebe.

Die DE 1 984 404 U beschreibt die Anordnung eines Lüfterrades auf der Nabe eines Kupplungsflansches, der auf der Antriebswelle des Kegelradgetriebes angebracht ist. Der zu dem Getriebegehäuse gehörende konische Gehäusehals, der die Lagerbuchse mit der Kegelritzelwelle umschließt, wird durch die zusätzliche Anordnung des Lüfterrades nicht verändert. Der Lüfter wird so an die vorgegebene Kontur des Getriebes angepasst, dass die Schaufeln auch Teile des Gehäuses umschließen. Die an den Lüfter angepasste Lüfterhaube muss den Luftstrom entlang des konischen Gehäusehalses der Kegelradstufe zum Getriebegehäuse führen. Nachteilig an einer solchen Ausführung sind die axial weiten Strecken, die der Luftstrom bis zur Gehäuseoberfläche des Getriebes überwinden muss. Ebenso nachteilig ist die aufwendige Gestaltung von Lüfter und Lüfterhaube. Die Lüfterhaube ist außerdem nicht dazu geeignet, im Bereich der Kupplung den erforderlichen Zugriffsschutz zu verwirklichen.

Aus der gattungsgemäßenDE 10 2004 030 180 A1 ist ein Getriebegehäuse für ein Kegelstirnradgetriebe bekannt, das einen am Getriebegehäuse angeformten Laternenflansch aufweist und als ein einstückiges Gussteil hergestellt wird. Der Laternenflansch enthält mehrere Öffnungen, durch die ein von einem Lüfterrad erzeugter Luftstrom hindurchtritt und der in Kanälen zu dem Getriebegehäuse geführt wird. Der angeformte Lagerflansch ist stirnseitig vor dem Gehäusehals der Kegelritzelwelle angebracht und führt zu einem nachteilig langen axialen Platzbedarf der Antriebseinheit. Der stirnseitige Flansch der Lagerbuchse der Kegelritzelwelle stützt sich ebenfalls in dem Lagerflansch ab und verlegt durch seine radialen Abmessungen die Luftdurchtrittsöffnungen im angeformten Laternenflansch sehr weit nach außen, so dass sich hier mit dem großen radialen Mindestdurchmesser für den Öffnungsbeginn strömungstechnische Nachteile ergeben.

Die bekannte Zusammenstellung von Einzelkomponenten der Getriebe aus einem Baukastenprogramm zu einem Antriebsstrang führt stets zu einem langbauenden Gesamtantrieb. Darüber hinaus behindern die ausgeprägten Schnittstellen zwischen den Einzelkomponenten besonders die Funktion des Lüfters. Es lassen sich für den Lüfter zwei verschiedene Wirkprinzipien unterscheiden. Axiallüfter fördern über den gesamten Lüfterquerschnitt einen Luftstrom in axialer Richtung. Nachteilig ist die drehrichtungsabhängige Förderrichtung der Luft. Radiallüfter saugen im Bereich der Antriebswelle die Luft an und fördern sie den Schaufeln am Lüfter entlang radial nach außen. Hier müssen Luftleitbleche oder -hauben den Luftstrom gezielt umlenken. Der Radiallüfter kann besonders vorteilhaft drehrichtungsunabhängig gestaltet werden. Nachteilig ist die Luftansaugung im Bereich der Welle. Die Schnittstellen der angrenzenden Bauelemente im Antriebsstrang behindern mit ihren Einhausungen, wie z. B. die Abdeckhaube einer Kupplung, regelmäßig die Förderwirkung des Radiallüfters. Die Optimierung von Einzelkomponenten, wie z. B. von Lüfter und Lüfterhaube im Zusammenwirken mit einem Kegelradgetriebe, führen allein zu keinen wesentlichen Verbesserungen.

Der Erfindung liegt die Aufgabe zugrunde, das gattungsgemäße nach dem Baukastenprinzip aufgebaute Kegelradgetriebe derart zu verbessern, dass eine aus Kegelradgetriebe und Elektromotor bestehende Antriebseinheit mit einem kompakten, axial kurzbauenden Aufbau und gleichzeitig hoher Steifigkeit auch für eine große Motorleistung erreicht werden kann. Außerdem soll eine einsatzfallabhängige Ausrüstung mit Zusatzaggregaten wie Kupplungen und Bremsen zu keiner Behinderung der Luftzuführung zur Kühlung der Antriebseinheit führen.

Die Aufgabe wird bei einem gattungsgemäßen Kegelradgetriebe erfindungsgemäß durch die kennzeichnenden Merkmale des Anspruchs 1 gelöst. Eine vorteilhafte Ausgestaltung der Erfindung ist Gegenstand der Unteransprüche.

Die Erfindung und die mit der Erfindung verbundenen Vorteile werden nachfolgend an einem in der Zeichnung dargestellten Ausführungsbeispiel näher erläutert. Es zeigen:
- Fig. 1: eine im Längsschnitt dargestellte seitenansicht eines Kegelradgetriebes mit einer Motorlaterne gemäß der Erfindung und
- Fig. 2: eine Ansicht in axialer Richtung auf den Laternenflansch an dem Kegelradgetriebe gemäß Fig. 1.

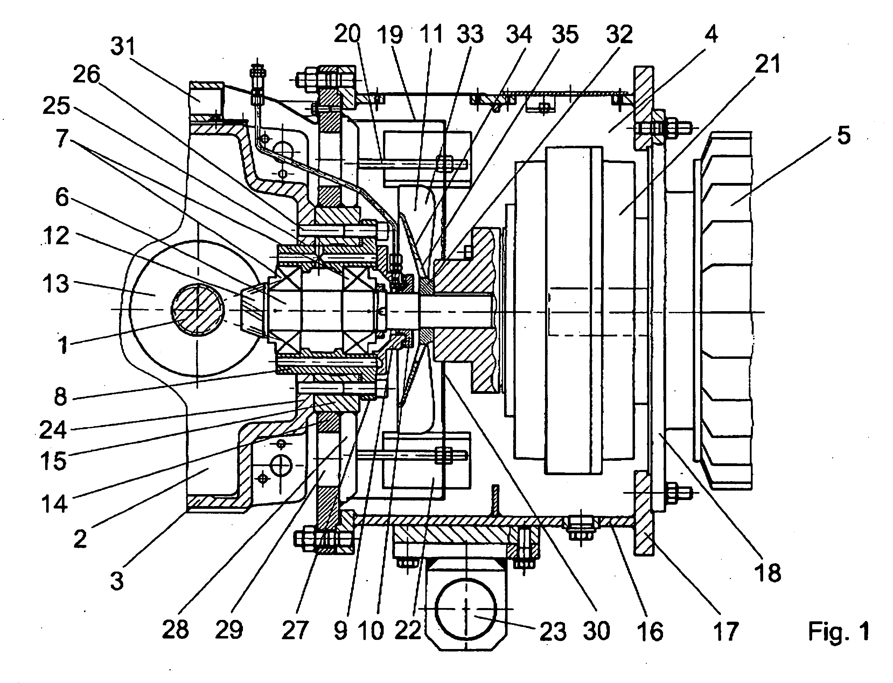

Der Fig. 1 ist eine eingangsseitige Kegelradstufe 1 eines einstufigen Kegelradgetriebes 2 oder eines mehrstufigen Kegelstirnradgetriebes in einem aufgeschnittenen Getriebegehäuse 3 zu entnehmen. Eine Motorlaterne 4 stellt den Übergang von dem Getriebegehäuse 3 zu einem Elektromotor 5 her. Die Abtriebswelle des Elektromotors 5 ist über eine Kupplung 21 mit der eingangsseitigen Kegelritzelwelle 6 zu einer Antriebseinheit verbunden.

Die Kegelradstufe 1 des Kegelradgetriebes besteht aus einer Kegelritzelwelle 6, aus Wälzlagern 7 zur Lagerung der Kegelritzelwelle 6, aus einer die Wälzlager 7 aufnehmenden Flanschbuchse 8, aus einem Lagerdeckel 9 und aus einem Ringlabyrinth einer als Taconitedichtung ausgebildeten Dichtung 10 als Abschluss der Lagerung. Ein Kegelritzel 12, das fliegend auf der Kegelritzelwelle 6 gelagert ist, treibt ein Kegelrad 13 auf einer nicht weiter dargestellten Zwischenwelle in dem Kegelradgetriebe 2 an.

Die Motorlaterne 4 weist eine zylindrische Außenwand 16 auf, an die sich auf der Getriebeseite ein Laternenflansch 14 und an der gegenüberliegenden Seite ein weiterer Flansch 17 anschließt. Der Laternenflansch 14 ist in der Flanschmitte mit einer Lagerplatte 15 versehen, über die der Laternenflansch 14 auf die später beschriebene Weise mit dem Getriebegehäuse 3 verbunden ist.

Der weitere Flansch 17 ist mit einem Motorflansch 18 an dem Motorgehäuse des Elektromotors 5 verbunden und stellt den Übergang der Motorlaterne 4 zu dem Elektromotor 5 her. Die Anschlussmaße des Elektromotors 5 und das Bohrbild im Motorflansch 18 sind in international gültigen Normen festgelegt. Im Inneren der Motorlaterne 4 ist auf der Kegelritzelwelle 6 ein Lüfter 11 angeordnet, der vorteilhafterweise als Radiallüfter ausgebildet ist.
Eine sehr einfach gestaltete, zylindrische Luftleithaube 19 umgibt den Lüfter 11. Die Luftleithaube 19 ist über eine Verbindung mit Gewindestangen 20 an dem Laternenflansch 14 angebracht.
In der Außenwand 16 der Motorlaterne 4 befinden sich Öffnungen 22, die sowohl der Luftzufuhr dienen als auch für Wartungsarbeiten benutzt werden. Im unteren Bereich der Motorlaterne 4 befindet sich eine Aufnahme 23 für eine Drehmomentenstütze.

Die antriebsseitige Stirnwand 24 des Getriebegehäuses 3 weist im Bereich der Lagerplatte 15 des Laternenflansches 14 eine im Vergleich zu bekannten angeformten Lagerhälsen zur Aufnahme einer Kegelritzelwelle sehr dünne Wanddicke auf. An den dünnen Wandbereich der Stirnwand 24 des Getriebegehäuses 3 schließt sich die im Vergleich zum Laternenflansch 14 der Motorlaterne 4 sehr dicke Lagerplatte 15 an. Durch die Stirnwand 24 und die Lagerplatte 15 führt eine gemeinsame Bohrung 25 zur Aufnahme der Flanschbuchse 8 hindurch. Im Gegensatz zu bekannten angeformten Lagerhälsen oder Lagertöpfen führt die vorteilhafte Kombination aus Gehäusestirnwand 24 und Lagerplatte 15 zu einer erheblichen axialen Verkürzung der Gesamtlänge des Antriebszugs. Die Gestaltung der Lagerung für die Flanschbuchse 8 aus der Paarung einer dünnen Gehäusestirnwand 24 und der dicken Lagerplatte 15 zu einer insgesamt die Flanschbuchse 8 umschließenden Einheit stellt zudem eine ausreichend hohe Steifigkeit für die Führung der Kegelritzelwelle 6 bereit.

Die zylindrische Außenfläche der Flanschbuchse 8 ist mit hinreichend engen Toleranzen für Maße, Form und Lage versehen, um die Kombination aus Flanschbuchse 8, Getriebegehäuse 3 und der Lagerplatte 15 zu zentrieren. Die Flanschbuchse 8 ist mit einem stirnseitigen Flansch 27 versehen, durch den mehrere Schrauben 26 hindurchgeführt sind. Die Schrauben 26 verbinden die für die Lagerung einer Kegelritzelwelle 6 notwendigen Gehäusekomponenten - die Flanschbuchse 8, die Lagerplatte 15, die Stirnwand 24 - miteinander, wodurch ein sehr kurz und modular aufgebautes Getriebegehäuse 3 gebildet wird. Das erforderliche Tragbild im Zahneingriff der Kegelradstufe 1 lässt sich sehr einfach über Passscheiben zwischen dem Flansch 27 der Flanschbuchse 8 und der Lagerplatte 15 einstellen. Die Zentrierung der Gehäusekomponenten kann auch über die gleichwertigen Mittel wie Passstifte oder Absätze in den Fügeflächen erfolgen.

Der Laternenflansch 14 der Motorlaterne 4 ist zur Gewichtsreduzierung dünner gestaltet als die Lagerplatte 15. Der Laternenflansch 14 und die Lagerplatte 15 sind miteinander verschweißt und mit Rippen 28 versteift. Das aus Laternenflansch 14, Lagerplatte 15 und Rippen 28 gebildete Bauteil lässt sich mit gleichwertiger Funktionalität auch als Gussteil herstellen. In einer weiteren Abwandlung kann auch die Flanschbuchse 8 an das Gussteil angegossen werden.

Im Laternenflansch 14 befinden sich auf einem Teilkreis, dessen Durchmesser kleiner ist als der Durchmesser der Luftleithaube 19, vier Luftöffnungen 29, durch die der Kühlluftstrom von dem Lüfter 11 auf das Getriebegehäuse 3 gelangt. Die Rippen 28 des Laternenflansches 14 und der Lagerplatte 15, die im Bereich der Luftöffnungen 29 angeordnet sind, unterstützen die Führung des Luftstroms ebenso wie die Luftleithaube 19. Die Luftleithaube 19 hat im Gegensatz zu bekannten Lüfterhauben lediglich die Aufgabe, den radial gerichteten Luftstrom des Lüfters 11 in axiale Richtung umzulenken. Die Außenwand 16 der Motorlaterne 4 stellt den erforderlichen Zugriffsschutz vor den rotierenden Teilen des Lüfters 11 her. Im Bereich des Lufteintritts an einer Lüfternabe 32 ermöglicht eine einfache kreisrunde Öffnung 30 in der Luftleithaube 19 die ungehinderte Luftzufuhr aus dem Innenraum der Motorlaterne 4 bzw. aus der Umgebung durch die Öffnungen 22 in der Außenwand 16 der Motorlaterne 4. Der Durchmesser der Öffnung 30 hängt nur von dem Ansaugquerschnitt des Lüfters 11 ab. Im Gegensatz zu bekannten Schutz- und Luftleithauben muss die Öffnung 30 aus Gründen des Zugriffsschutzes nicht mit Gitterelementen gesichert werden. Da sich auch die benachbarte Kupplung 21 in der Motorlaterne 4 befindet und deshalb keinen weiteren Zugriffsschutz erfordert, wird der Lufteintritt in den Lüfter 11 im Vergleich zu bekannten Einhausungen mit deutlichen Schnittstellen nicht behindert. Bei der vorteilhaften Gestaltung der Konstruktion für die Ansaugbedingungen in der Motorlaterne 4 lässt sich sogar die entstehende Wärme der Kupplung 21 durch den Lüfter 11 des Kegelradgetriebes 2 aus dem Antriebsstrang ableiten. Die Wirksamkeit der Kühlleistung für das Getriebe wird bei einer zweckdienlich dimensionierten Förderleistung des Lüfters 11 natürlich nicht beeinträchtigt. Es ist zweckmäßig, den Kühlluftstrom nach dem Verlassen der Motorlaterne 4 durch die Öffnungen 29 mit weiteren Leitblechen 31 gezielt an dem Getriebegehäuse 3 entlang zu leiten.

Da im Bereich der schnelllaufenden Kegelritzelwelle 6 in den Wälzlagern 7 viel Wärme entsteht, kann durch Wärmeleitung durch die Lagerplatte 15 zum Laternenflansch 14 und den Rippen 28 eine zuverlässige und schnelle Wärmeabfuhr erreicht werden. Die Außenflächen der Lagerplatte 15, der Rippen 28 und des Laternenflansches 14 werden besonders gut von dem Kühlluftstrom des Lüfters 11 angeblasen. Aufgrund der Materialanhäufung in der dicken Lagerplatte 15 kann die Wärme sehr schnell aus der Flanschbuchse 8 aufgenommen und ungehindert abgeleitet werden. Der erreichte kompakte Aufbau ist im Hinblick auf die Wärmeabfuhr ein weiterer Vorteil im Gegensatz zu bekannten Motorlaternen, die an anderen Stellen am Getriebegehäuse angeschraubt sind. Ebenso erhöht sich die strömungstechnische Wirksamkeit des eingesetzten bekannten und als Radiallüfter ausgebildeten Lüfters 11 durch die erfindungsgemäße Gestaltung der Gehäusekomponenten deutlich.

Ein weiterer Vorteil durch den kompakten modularen Aufbau der Lagerung der Kegelritzelwelle 6 ist die Möglichkeit, Kegelritzelwellen aus dem normalen Teileprogramm eines Baukastengetriebes ohne konstruktive Änderungen zu verwenden, da keine axiale Verlängerung des Antriebs erfolgt. Dem Zweck dient ebenso der Wegfall der klar ausgeprägten Schnittstellen zwischen den Einzelkomponenten Kegelradgetriebe und Motorlaterne, da die Lagerplatte 15 sowohl Funktionen des Getriebegehäuses 3 als auch der Motorlaterne 4 erfüllt.

Von entscheidender Bedeutung für die Funktion der vorteilhaft gestalteten Gehäusekomponenten zur Lagerung der Kegelritzelwelle 6 ist die Möglichkeit, langjährig zuverlässig bewährte Standardbauteile, wie den Radiallüfter, unverändert einsetzen zu können. Bei Antriebseinheiten im höheren Leistungsbereich sind immer Mittel zur Verbesserung der Wärmeabfuhr einzusetzen. Ein Lüfter ist hierfür ein besonders geeignetes Bauteil.

Der Lüfter 11 ist auf der Kegelritzelwelle 6 direkt neben dem Deckel der Dichtung 10 form- und/oder kraftschlüssig befestigt. An die Lüfternabe 32 schließen sich radial die nach außen gerichteten Schaufeln 33 des Lüfters 11 an. Der in Nabenhöhe von dem Lüfter 11 angesaugte Luftstrom wird von einer schräg nach außen laufenden Ringfläche 34 zwischen den Schaufeln 33 von dem Ansaugeintritt in Wellenhöhe zu den Enden der radialen Schaufeln 33 umgelenkt. In der Ringfläche 34 befinden sich Durchbrüche 35, die zu einer beidseitigen Umströmung der Ringfläche 34 mit Luft aus dem Ansaugbereich führen. Die Gestaltung der Ringfläche 34 mit den Durchbrüchen 35 verhindert die Bildung eines Unterdrucks im Bereich der Dichtung 10, der zu einer Leckage von Getriebeöl führen kann. Die Kombination der ausgereiften und langjährig bewährten Konstruktion des Lüfters 11 mit den vorteilhaft gestalteten Gehäusekomponenten ermöglicht in Wechselwirkung den angestrebten axial verkürzten Aufbau der Antriebseinheit.

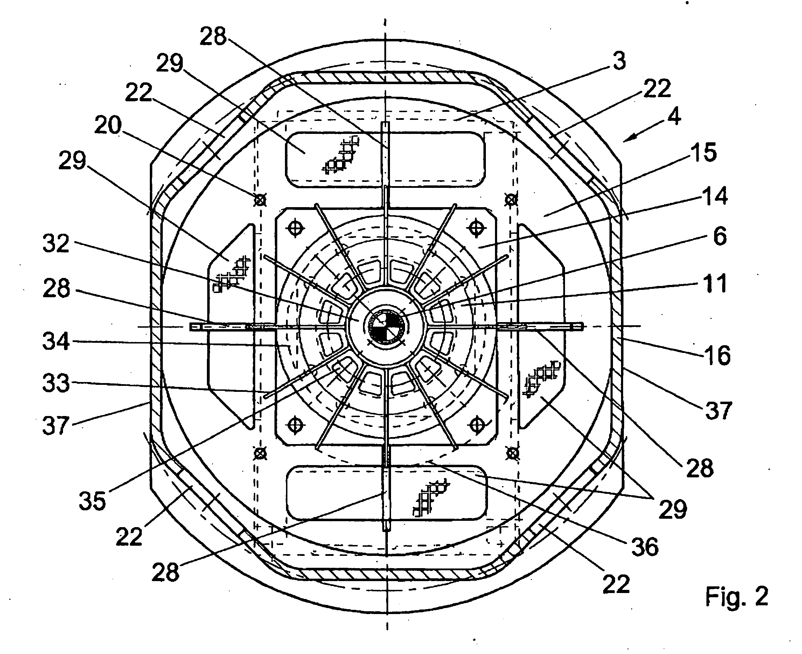

In Fig. 2 ist eine Ansicht in axialer Richtung auf den Laternenflansch 14 dargestellt. Dabei wurde die Kupplung 21, die gemeinsam mit dem Lüfter 11 auf der Kegelritzelwelle 6 sitzt, nicht eingezeichnet. In dem Laternenflansch 14 sind vier Luftöffnungen 29 enthalten, durch die der Kühlluftstrom zu den Seitenflächen des hinter dem Laternenflansch 14 liegenden Getriebegehäuses 3 strömt. Die Flügel des Lüfters 11 erzeugen den Luftstrom und überstreichen eine Kreisfläche 36, die die Lagerplatte 15 und Teile des Laternenflansches 14 überdecken.

Insbesondere liegen die Lagerplatte 15 und die Rippen 28 direkt in dem von dem Lüfter 11 erzeugten Luftstrom und können über den kurzen direkten Kontakt zur Flanschbuchse 8 die Wärme der Wälzlager 7 an allen hier dargestellten vier Öffnungen 29 besonders gut ableiten. Außerdem lenken die Rippen 28 den Luftstrom dabei in die Kanäle zu dem Getriebe um.

Die rotationssymmetrischen, in der Motorlaterne 4 angeordneten Bauteile, wie der Lüfter 11 und die Kupplung 21, erfordern eine zylindrische Gestaltung der Außenwand 16 des Verbindungselements Motorlaterne 4. Da jedoch die Breite der gesamten Antriebseinheit beschränkt ist, kann über die Abflachungen 37 zu beiden Seiten des Laternenflansches 14 und der Außenwand 16 der Motorlaterne 4 Bauraum eingespart werden. Somit setzt sich durch die vorteilhafte Formgebung die quaderförmige Gestalt des Getriebegehäuses 3 bis zum Elektromotor 5 fort. Die dargestellten Außenwände 16 lassen sich der vorgegebenen Kontur in vorteilhafter Weise mit einem prismatischen Zwischenstück anpassen.

## Patentansprüche

1. Kegelradgetriebe, insbesondere Kegelstirnradgetriebe mit einer oder mehreren Getriebestufen, mit einem die Getriebestufen umschließenden Getriebegehäuse (3) und mit einer Motorlaterne (4), die über einen Laternenflansch (14) an das Getriebegehäuse (3) und an einen Elektromotor (5) angeschlossen ist, wobei die antriebsseitige Welle (6) der Kegelradgetriebestufe in einer Flanschbuchse (8) gelagert ist, **dadurch gekennzeichnet, dass** Laternenflansch (14) und antriebsseitige Stirnwand (24) des Getriebegehäuses (3) eine gemeinsame Bohrung aufweisen, dass die gemeinsame Bohrung die Flanschbuchse (8) der antriebsseitigen Welle (6) umschließt, dass die Flanschbuchse (8) eine zylindrische Außenfläche aufweist, die das Getriebegehäuse (3), den Laternenflansch (14) und die Flanschbuchse (8) zentriert, und dass die Flanschbuchse (8), der Laternenflansch (14) und die antriebsseitige Stirnwand (24) durch Schrauben (26) miteinander verbunden sind.

2. Kegelradgetriebe nach Anspruch 1, **dadurch gekennzeichnet, dass** die Flanschbuchse (8) mit einem stirnseitigen Flansch (27) versehen ist, der auf der dem Getriebegehäuse (3) abgewandten Seite an dem Laternenflansch (14) anliegt.

3. Kegelradgetriebe nach Anspruch 1, **dadurch gekennzeichnet, dass** der Laternenflansch (14) eine zentrale Lagerplatte (15) aufweist, die die Flanschbuchse (8) umschließt, und dass die Dicke der Lagerplatte (15) größer ist als die Dicke der Stirnwand (24) des Getriebegehäuses (3) und größer ist als die Dicke des Laternenflansches (14) außerhalb der Lagerplatte (15).

4. Kegelradgetriebe nach Anspruch 1, **dadurch gekennzeichnet, dass** der Laternenflansch (14) und die Lagerplatte (15) durch Rippen (28) verstärkt sind.

5. Kegelradgetriebe nach Anspruch 1, **dadurch gekennzeichnet, dass** eine Außenwand (16) der Motorlaterne (4) und der Laternenflansch (14) seitlich mit Abflachungen (37) versehen sind.

6. Kegelradgetriebe nach Anspruch 1, **dadurch gekennzeichnet, dass** innerhalb der Motorlaterne (4) auf der antriebsseitigen Welle (6) des Getriebes ein Lüfter (11) angeordnet ist, dass in der Außenwand (16) der Motorlaterne (4) Öffnungen (22) zum Ansaugen von Luft und in dem Laternenflansch (14) Luftöffnungen (29) zum Austritt der Luft angeordnet sind.

7. Kegelradgetriebe nach Anspruch 6, **dadurch gekennzeichnet, dass** der Lüfter (11) ein Radiallüfter ist.

8. Kegelradgetriebe nach Anspruch 6, **dadurch gekennzeichnet, dass** der Lüfter (11) von einer zylindrischen Luftleithaube (19) mit einer axialen Öffnung (30) umgeben ist und dass die Luftleithaube (19) an dem Laternenflansch (14) befestigt ist.

9. Kegelradgetriebe nach Anspruch 6, **dadurch gekennzeichnet, dass** im Bereich der Öffnungen (29) in dem Laternenflansch (14) auf der einen Seite des Laternenflansches (14) die Rippen (28) des Laternenflansches (14) und der Lagerplatte (15) und auf der anderen Seite des Laternenflansches (14) auf dem Getriebegehäuse (3) Leitbleche (31) angeordnet sind, dass die Rippen (28) und die Leitbleche (31) zueinander ausgerichtet sind und dass die Rippen (28) und die Leitbleche (31) einen Strömungsweg für die von dem Lüfter (11) aus der Motorlaterne (4) angesaugte Luft bilden.

10. Kegelradgetriebe nach Anspruch 6, **dadurch gekennzeichnet, dass** der Lüfter (11) mit einer schräg nach außen verlaufenden, die Flanschbuchse (8) übergreifenden Ringfläche (34) versehen ist, in der sich Durchbrüche (35) befinden.

## Claims

1. Bevel gear unit, in particular bevel-helical gear unit with one or more gear stages, with a drive housing (3) enclosing the gear stages and with a motor bracket (4) which through a bracket flange (14) is connected with drive housing (3) and an electric motor (5) wherein the drive-side shaft (6) of the bevel gear stage rests in a flange bushing (8), **characterized in that** said bracket flange (14) and drive-side front wall (24) of said drive housing (3) are provided with a common bore, that the common bore encloses said flange bushing (8) of said drive-side shaft (6), that said flange bushing (8) comprises a cylindrical outside surface which centers said drive housing (3), said bracket flange (14) and said flange bushing (8), and that said flange bushing (8), said bracket flange (14) and said drive-side front wall (24) are interconnected by bolts.

2. Bevel gear unit according to claim 1, **characterized in that** said flange bushing (8) is provided with a front-side flange (27) which butts against said bracket flange (14) on the side opposite said drive housing (3).

3. Bevel gear unit according to claim 1, **characterized in that** said bracket flange (14) is provided with a central bearing plate (15) which encloses said flange bushing (8), and that the thickness of said bearing plate (15) is greater than the thickness of said front wall (24) of said drive housing (3) and greater than the thickness of said bracket flange (14) outside of said bearing plate (15).

4. Bevel gear unit according to claim 1, **characterized in that** said bracket flange (14) and said bearing plate (15) are reinforced by ribs (28).

5. Bevel gear unit according to claim 1, **characterized in that** one outside wall (16) of said motor bracket (4) and said bracket flange (14) are laterally provided with flattenings (37).

6. Bevel gear unit according to claim 1, **characterized in that** a blower (11) is arranged inside said motor bracket (4) on said drive-side shaft (6) of the gear unit, that in said outside wall (16) of said motor bracket (4) are arranged openings (22) for taking in air and in said bracket flange (14) are provided air openings (29) for the outlet of air.

7. Bevel gear unit according to claim 6, **characterized in that** said blower (11) is a radial flow blower.

8. Bevel gear unit according to claim 6, **characterized in that** said blower (11) is enclosed by a cylindrical air baffle hood (19) with an axial opening (30) and that said air baffle hood (19) is fixed at said bracket flange (14).

9. Bevel gear unit according to claim 6, **characterized in that**, in the area of said openings (29) in said bracket flange (14), said ribs (28) of said bracket flange (14) and said bearing plate (15) are arranged on one side of said bracket flange (14) and baffle plates (31) on the other side of said bracket flange (14) on said drive housing (3), that said ribs (28) and said baffle plates (31) are aligned with regard to each other and that said ribs (28) and said baffle plates (31) form a flow path for the air taken in by said blower (11) from said motor bracket (4).

10. Bevel gear unit according to claim 6, **characterized in that** said blower (11) is provided with an annular area (34), inclined towards the outside and overlapping said flange bracket (8), in which there are cutouts (35).

## Revendications

1. Engrenage à pignons coniques, en particulier engrenage droit à pignons coniques comprenant un ou plusieurs niveaux d'engrenage, un carter d'engrenage (3) entourant les niveaux d'engrenage et une lanterne de moteur (4), qui est raccordée par une bride de lanterne (14) au carter d'engrenage (3) et à un moteur électrique (5), l'arbre (6) côté entraînement du niveau d'engrenage à pignons coniques étant logé dans une douille à bride (8), **caractérisée en ce que** la bride de lanterne (14) et la paroi avant (24) côté entraînement du carter d'engrenage (3) présentent un alésage commun, **en ce que** l'alésage commun entoure la douille à bride (8) de l'arbre (6) côté entraînement, **en ce que** la douille à bride (8) présente une surface extérieure cylindrique, qui centre le carter d'engrenage (3), la bride de lanterne (14) et la douille à bride (8), et **en ce que** la douille à bride (8), la bride de lanterne (14) et la paroi avant (24) côté entraînement sont reliés entre eux par des vis (26).

2. Engrenage à pignons coniques selon la revendication 1, **caractérisé en ce que** la douille à bride (8) est dotée d'une bride (27) côté avant, qui s'appuie sur le côté opposé au carter d'engrenage (3) sur la bride de lanterne (14).

3. Engrenage à pignons coniques selon la revendication 1, **caractérisé en ce que** la bride de lanterne (14) présente une plaque d'appui (15) centrale, qui entoure la douille à bride (8), et **en ce que** l'épaisseur de la plaque d'appui (15) est supérieure à l'épaisseur de la paroi avant (24) du carter d'engrenage (3) et supérieure à l'épaisseur de la bride de lanterne (14) à l'extérieur de la plaque d'appui (15).

4. Engrenage à pignons coniques selon la revendication 1, **caractérisé en ce que** la douille de lanterne (14) et la plaque d'appui (15) sont renforcées par des nervures (28).

5. Engrenage à pignons coniques selon la revendication 1, **caractérisé en ce qu'**une paroi extérieure (16) de la lanterne de moteur (4) et la bride de lanterne (14) sont dotées latéralement de parties aplaties (37).

6. Engrenage à pignons coniques selon la revendication 1, **caractérisé en ce qu'**un ventilateur (11) est disposé à l'intérieur de la lanterne de moteur (4) sur l'arbre (6) côté entraînement de l'engrenage, **en ce que** des ouvertures (22) pour l'aspiration de l'air et des ouvertures d'air (29) pour la sortie de l'air sont disposées respectivement dans la paroi extérieure (16) de la lanterne de moteur (4) et dans la bride de lanterne (14).

7. Engrenage à pignons coniques selon la revendication 6, **caractérisé en ce que** le ventilateur (11) est un ventilateur radial.

8. Engrenage à pignons coniques selon la revendication 6, **caractérisé en ce que** le ventilateur (11) est entouré d'un capot déflecteur d'air (19) cylindrique avec une ouverture (30) axiale et **en ce que** le capot déflecteur d'air (19) est fixé sur la bride de lanterne (14).

9. Engrenage à pignons coniques selon la revendication 6, **caractérisé en ce que** les nervures (28) de la bride de lanterne (14) et de la plaque d'appui (15) sont disposées dans la zone des ouvertures (29) dans la bride de lanterne (14) sur un côté de la bride de lanterne (14) et des chicanes (31) sont disposées sur l'autre côté de la bride de lanterne (14) sur le carter d'engrenage (3), **en ce que** les nervures (28) et les chicanes (31) sont orientées les unes vers les autres et **en ce que** les nervures (28) et les chicanes (31) forment un chemin d'écoulement pour l'air aspiré par le ventilateur (11) hors de la lanterne de moteur (4).

10. Engrenage à pignons coniques selon la revendication 6, **caractérisé en ce que** le ventilateur (11) est doté d'une surface annulaire (34) agencée en biais vers l'extérieur et recouvrant la douille à bride (8), surface dans laquelle se trouve des passages (35).
